# EUROPÄISCHE PATENTANMELDUNG

(11) **EP 2 104 210 A2**
(43) Veröffentlichungstag der Anmeldung: **23.09.2009**
(21) Anmeldenummer: 09002012.4
(22) Anmeldetag: 13.02.2009
(51) Int. Cl.: H02K 49/04

(54) **Magnetkupplung**

(30) Priorität: 19.03.2008 DE 202008003913 U
(71) Anmelder: Hartmann & König Stromzuführungs AG, 76676 Graben-Neudorf (DE)
(72) Erfinder: Herberger, Hubert, 76676 Graben-Neudorf (DE)
(74) Vertreter: Kesselhut, Wolf

(57) **Zusammenfassung**

Eine Magnetkupplung (1) zur Beaufschlagung eines mit unterschiedlichen Geschwindigkeiten rotierbaren Bauteils (4), insbesondere einer Motor-Kabeltrommel eines Krans, mit Drehmoment, umfassend eine mit einer vorgegebenen Drehzahl über einen Antriebsmotor (8) antreibbare Antriebswelle (6), eine an einem Ende der Antriebswelle (6) drehfest an dieser aufgenommene Hysteresescheibe (10), eine koaxial zur Antriebswelle (6) verlaufende und mit dem rotierbaren Bauteil (4) antriebsmäßig koppelbare Abtriebswelle (14), und eine an dem der Hysteresescheibe (10) zugeordneten Ende der Abtriebswelle (14) drehfest mit dieser verbundene Magnetscheibe (12), welche in einem vorgegebenen Abstand (A) zur Hysteresescheibe (10) angeordnet ist, derart, dass infolge der Magnetkraftwirkung zwischen der Magnetscheibe (12) und der Hysteresescheibe (10) bei einer Rotation der Antriebswelle (6) ein Drehmoment von der Antriebswelle (6) auf die Abtriebswelle (14) übertragen wird, zeichnet sich dadurch aus, dass die Hysteresescheibe (10) auf der Antriebswelle (6) und die Magnetscheibe (12) auf der Abtriebswelle (14) fliegend gelagert sind.

## Beschreibung

Die Erfindung betrifft eine Magnetkupplung zur Beaufschlagung eines mit unterschiedlichen Geschwindigkeiten rotierbaren Bauteils, insbesondere einer Motor-Kabeltrommel eines Krans, mit einem im Wesentlichen konstanten Drehmoment gemäß dem Oberbegriff von Anspruch 1.

Zum Antrieb von Kabeltrommeln von Kränen werden bekanntermaßen Magnetkupplungen eingesetzt, bei denen eine Hysteresescheibe über eine Antriebswelle von einem Antriebsmotor, z.B. einem mit einer festen Drehzahl rotierender Elektromotor, angetrieben wird. Die Hysteresescheibe ist in dichtem Abstand zu einer koaxial zur Hysteresescheibe rotierenden Magnetscheibe angeordnet, welch letztere über eine Abtriebswelle und ein zwischengeschaltetes Getriebe die Kabeltrommel antreibt und diese unabhängig davon, ob der Kran bewegt wird oder steht, mit einem im Wesentlichen konstanten Drehmoment beaufschlagt, um das Stromzuführungskabel des Krans unter Zugspannung zu halten. Um hierbei eine koaxiale Ausrichtung von Hysteresescheibe und Magnetscheibe sicher zu stellen, ist bei den bekannten Magnetkupplungen zwischen der Magnetscheibe und der Hysteresescheibe ein Stützlager angeordnet, über welches sich die Hysteresescheibe an der Magnetscheibe drehbar abstützt.

Hierbei ergibt sich das Problem, dass mit zunehmender Größe des Durchmessers einer Kabeltrommel die zum Antrieb derselben erforderliche Antriebsleistung erhöht werden muss, um die Trommel in gewohnter Weise beschleunigen zu können, wenn der Kran sich aus dem Stillstand in Bewegung setzt. Diese Antriebsleistung wird jedoch beim Stillstand des Krans nahezu vollständig in Wärme überführt, die in erster Linie im Bereich der Hysteresescheibe entsteht, welche sich demgemäß in der Praxis sehr stark erwärmt.

Wie die Anmelderin in diesem Zusammenhang gefunden hat, treten im Falle von Magnetkupplungen mit einem Durchmesser von 250 mm - mit denen die Erzeugung eines Drehmoments von ca. 38 Nm möglich ist - bei einer Drehzahl des Antriebsmotors von 900 U/min Temperaturen von mehr als 280°C auf, die in der Praxis dazu führen, dass das zwischen der Hysteresescheibe und der Magnetscheibe angeordnete Stützlager einem sehr hohen Verschleiß unterliegt und oftmals schon nach wenigen Tagen oder gar Stunden ersetzt werden muss.

Demgemäß ist es eine Aufgabe der vorliegenden Erfindung, eine Magnetkupplung zu schaffen, die bei einer vorgegebenen Drehzahl der Antriebswelle ein erhöhtes Drehmoment an der Abtriebswelle erzeugt und gleichzeitig eine verbesserte Standfestigkeit besitzt.

Diese Aufgabe wird erfindungsgemäß durch die Merkmale von Anspruch 1 gelöst.

Weitere Merkmale der Erfindung sind in den Unteransprüchen beschrieben.

Gemäß der Erfindung umfasst eine Magnetkupplung zur Beaufschlagung eines mit unterschiedlichen Geschwindigkeiten rotierbaren Bauteils, insbesondere einer Motor-Kabeltrommel eines Krans eine Antriebswelle, die durch einen Motor, insbesondere einen Drehstrom-Elektromotor, mit einer konstanten Drehzahl angetrieben wird. Am freien Ende der Antriebswelle, welches dem Motor abgewandt ist, ist eine Hysteresescheibe mit einem Durchmesser von bevorzugt mehr als 250 mm angeordnet, die z.B. über eine Keilverbindung drehfest mit der Antriebswelle verbunden ist. Der Hysteresescheibe, die aus elektrisch leitendem Material wie insbesondere Stahl besteht, ist eine Magnetscheibe zugeordnet, die im Wesentlichen den gleichen Durchmesser wie die Hysteresescheibe besitzt und koaxial zu dieser mit einem vorgegebenen Spaltabstand angeordnet ist. Die Magnetscheibe, die z.B. einen scheibenförmigen Träger aus Stahl umfasst, auf dem eine Vielzahl von Permanentmagneten bevorzugt segmentweise angeordnet sind, ist am Ende einer mit der Antriebswelle fluchtenden Abtriebswelle befestigt, die z.B. über ein Getriebe auf das rotierbare Bauteil wirkt, um dieses mit einem Drehmoment vorgegebener Größe zu beaufschlagen, unabhängig davon, ob das Bauteil gerade rotiert oder sich im Stillstand befindet.

Die Erfindungsgemäße Magnetkupplung zeichnet sich dadurch aus, dass sowohl die Hysteresescheibe auf der Antriebswelle, als auch die Magnetscheibe auf der Abtriebswelle fliegend gelagert sind, wodurch das sonst übliche Stützlager entfallen kann.

Obgleich das Fortlassen des Stützlagers aufgrund des Wegfalls der damit einhergehenden Zentrierung von Hysteresescheibe und Magnetscheibe auf den ersten Blick erwartungsgemäß zu einer Verschlechterung des Gleichlaufs oder gar zu unwuchtbedingten Schwingungen führt, konnte dies bei der erfindungsgemäßen Ausführungsform in der Praxis in überraschender Weise nicht beobachtet werden.

Durch die Erfindung ergibt sich der Vorteil, dass infolge des Wegfalls des Stützlagers nicht nur die Anzahl an Bauteilen insgesamt reduziert wird, sondern dass auch die vergleichsweise hohen Kosten für den Austausch des Lagers entfallen, da hierzu in der Regel eine Demontage der gesamten Kupplungseinheit erforderlich ist und ein solcher Austausch im Falle einer über eine Magnetkupplung angetrieben Kabeltrommel eines Krans bedeutet, dass der gesamte Kran während dieser Zeitdauer nicht einsatzbereit ist.

Nach einem weiteren der Erfindung zugrund liegenden Gedanken ist die Hysteresescheibe in vorteilhafter Weise direkt am freien Ende der Antriebswelle eines Elektromotors befestigt, der vozugsweise ein mit einer konstanten festen Drehzahl umlaufender Drehstrom-Elektromotor ist. Hierdurch ergibt sich der Vorteil, dass die Anzahl der Komponenten der erfindungsgemäßen Magnetkupplung abermals reduziert wird, da die Lagerung der Antriebswelle durch die Wellenlager im Gehäuse des Elektromotors übernommen wird. Wie die Anmelderin im Rahmen von Dauertestversuchen gefunden hat, erfolgt hierbei trotz der fliegenden Lagerung der Hysteresescheibe keine Zusatzbelastung der Motorlager durch im Bereich der Hysteresescheibe angreifende Biegemomente, die in der Regel zu einem vorzeitigen Verschleiß der Motorlager führen.

Bei der bevorzugten Ausführungsform der Erfindung sind die Hysteresescheibe und die Magnetscheibe in vorteilhafter Weise in einem diese umgebenden Gehäuse angeordnet. Das Gehäuse ist dabei stirnseitig am Antriebsmotor befestigt ist und besitzt im Bereich der Abtriebswelle bevorzugt ein Radiallager, über welches sich die Abtriebswelle gegenüber dem Gehäuse abstützt. Durch dieses Radiallager, welches auf der Abtriebswelle bevorzugt in unmittelbarer Nähe der Magnetscheibe angeordnet ist, lässt sich die Abtriebswelle zur Erzielung eines Gleichlaufs von Magnetscheibe und Hysteresescheibe auch bei der Verwendung von vergleichsweise kostengünstigen Lagern, die nur für vergleichsweise niedrige Temperaturen ausgelegt sind, zuverlässig lagern, da das Radiallage bei dieser Ausführungsform in vorteilhafter Weise durch die Magnetscheibe von der deutlich heißeren Hysteresescheibe abgeschirmt wird.

Hierbei kann es weiterhin vorgesehen sein, dass das Gehäuse in zwei Gehäusehälften unterteilt ist, die über Führungen und bekannte Stellmittel wie z.B. Schrauben und Gewindehülsen, relativ zueinander in axialer Richtung verschiebbar sind. Hierdurch ergibt sich der Vorteil, dass sich bei laufender Magnetkupplung durch Betätigen der Stellmittel der Abstand zwischen der Hysteresscheibe und der Magnetscheibe einstellen lässt, was wiederum dazu führt, dass sich das von der Magnetkupplung erzeugte Drehmoment sehr leicht verändern lässt. In gleicher Weise wird hierdurch die Möglichkeit eröffnet, dass die Magnetkupplung auf ein gewünschtes Drehmoment eingestellt werden kann, welches z.B. vom Kranhersteller vorgegeben wird.

Nach einem weiteren der Erfindung zugrund liegenden Gedanken ist auf der Antriebswelle ein Lüfterrad angeordnet ist, welches Umgebungsluft ansaugt und in Richtung auf die Hysteresescheibe zu fördert, um diese durch den entstehenden Luftstrom zu kühlen. Da die Antriebswelle durch den Elektromotor während des Betriebs der erfindungsgemäßen Magnetkupplung ständig rotiert wird, ergibt sich in vorteilhafter Weise ein Zwangskühlung der Hysteresescheibe sowie auch der anderen Komponenten innerhalb des Gehäuses, welche die Temperatur der Bauteile insgesamt weiter reduziert und hierdurch die Lebensdauer entsprechend erhöht.

Bei der zuletzt beschriebenen Ausführungsform der Erfindung kann es vorgesehen sein, dass ein Teil des vom Lüfterrad erzeugten Luftstroms außen an der Hysteresescheibe vorbei in Richtung zur Magnetscheibe geleitet wird. Die Magnetscheibe ist in diesem Falle bevorzugt von einem glockenförmigen, d.h. im Bereich der Magnetscheibe einseitig geschlossenen hohlzylinderförmigen Kühlkörper umgeben, auf dessen Außenseite eine Vielzahl von umfänglichen Kühllamellen oder Kühlrippen angeordnet sind, welche vom Luftstrom in axialer Richtung überstrichen werden, bevor dieser durch eine oder mehrere umfänglich an der Außenseite des Gehäuses oder stirnseitig in diesem geformte Luftaustrittsöffnungen wieder aus dem Gehäuse entweicht.

Durch den Einsatz eines verrippten Kühlkörpers, der die Magnetscheibe sowie auch die Abtriebswelle in axialer Richtung bevorzugt bis zum gehäuseseitigen Lager hin umgibt, wird die Temperatur der Magnetscheibe und des Radiallagers oder Stützlagers nicht nur weiter herabgesetzt, sondern es werden diese auch wirksam gegen eindringenden Schmutz geschützt, wodurch sich insbesondere die Lebensdauer des Lagers nochmals erhöht.

Nach einer weiteren Ausführungsform der erfindungsgemäßen Magnetkupplung ist die Hysteresescheibe nicht einteilige ausgebildet sondern in wenigstens zwei umfängliche Teilsegmente unterteilt. Diese Teilsegmente können z.B. über eine entsprechende Verschraubung miteinander verbunden sein, so dass durch Lösen der Verschraubung die beiden Teilsegmente separat aus dem Gehäuse entnommen werden können. Ein weiterer Vorteil, der sich durch die geteilte Ausgestaltung der Hysteresescheibe ergibt besteht darin, dass sich die Scheibe unter Temperatureinwirkung wesentlich formstabiler verhält und sich insbesondere nicht verzieht, wie dies bei einteiligen Hysteresescheiben oftmals zu beobachten ist. Wie die Anmelderin in diesem Zusammenhang gefunden hat, wird das Drehmoment, welches sich bei einem vorgegebenen Abstand zwischen der Magnetscheibe und der Hysteresescheibe bei einer vorgegebenen Magnetfeldstärke ergibt, in überraschender Weise durch die Teilung der Scheibe nicht merklich verringert, obgleich die in der Hysteresescheiben induzierten Wirbelströme sich nicht durch den Bereich des Schlitzes zwischen den beiden Teilsegmenten hindurch erstrecken.

Die Erfindung wird nachfolgend mit Bezug auf die Zeichnungen anhand einer bevorzugten Ausführungsform beschrieben.

In den Zeichnungen zeigt:

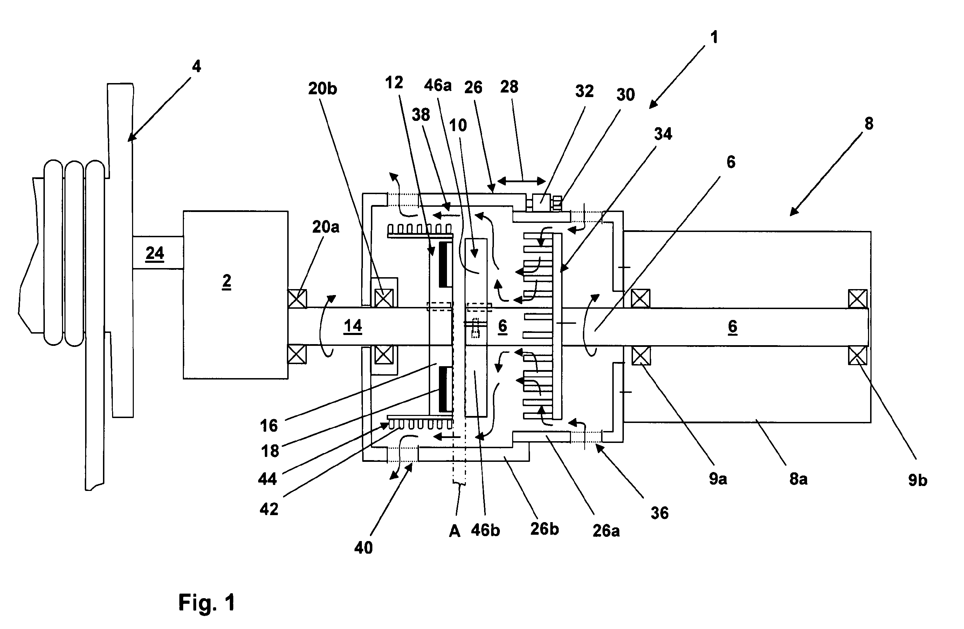

- Fig. 1: Eine schematische Querschnittsdarstellung der bevorzugten Ausführungsform der erfindungsgemäßen Magnetkupplung.

Wie in Fig. 1 gezeigt ist, umfasst eine erfindungsgemäße Magnetkupplung 1 zur Erzeugung eines Drehmoments, welches über ein Getriebe 2 auf ein rotierendes Bauteil in Form einer dargestellten Motor-Kabeltrommel 4 eines nicht näher gezeigten Krans übertragen wird, eine Antriebswelle 6, die durch einen Elektromotor 8, mit einer bevorzugt konstanten Drehzahl angetrieben wird. Bei der gezeigten Ausführungsform der Erfindung ist am freien Ende der Antriebswelle 6, welches vom Motor 8 abgewandt ist, eine Hysteresescheibe 10 befestigt, die einen Durchmesser von bevorzugt mehr als 250 mm besitzt. Die Hysteresescheibe 10 ist über eine in der Zeichnung durch die nicht näher bezeichnete, schematisch angedeutete Keilverbindung drehfest mit der Antriebswelle 6 verbunden und besteht aus elektrisch leitendem Material, z.B. aus Stahl.

Wie der Darstellung von Fig. 1 weiterhin entnommen werden kann, ist die Hysteresescheibe 10 auf der Antriebswelle 6 fliegend gelagert, welch letztere bevorzugt unmittelbar die Welle des angeflanschten Elektromotors 8 ist, die sich innerhalb des Gehäuses 8a des Elektromotors 8 in bekannter Weise durch ein erstes und ein zweites Wellenlager 9a, 9b abstützt.

Koaxial zur Hysteresescheibe 10 ist in einem Abstand A von deren stirnseitiger Außenfläche eine Magnetscheibe 12 angeordnet, die im Wesentlichen den gleichen Durchmesser wie die Hysteresescheibe 10 besitzt. Die Magnetscheibe 12 ist ebenfalls über eine nicht näher bezeichnete Keilverbindung auf einer mit der Antriebswelle 6 fluchtenden Abtriebswelle 14 befestigt und besitzt einen scheibenförmigen Träger 16 aus Stahl, auf dem z.B. acht Permanentmagnete 18 segmentweise bevorzugt durch Verkleben befestigt sind. Die Magnetscheibe 12 ist in gleicher Weise wie die Hysteresescheibe 10 auf der Abtriebswelle 14 fliegend gelagert, was bedeutet, dass sich zwischen der Hysteresescheibe 10 und der Magnetscheibe 12 kein weiteres Stützlager befindet. Die radiale Lagerung der Abtriebswelle 14 erfolgt gemäß der Darstellung von Fig. 1 hingegen durch ein erstes Stützlager 20a sowie ein zweites Stützlager 20b. Das erste Stützlager 20a ist hierbei im Bereich des der Magnetscheibe 12 fernen Endes der Abtriebswelle 14 angeordnet und stützt sich bevorzugt am Getriebe 2 ab, mit welchem die Abtriebswelle 14 antriebsmäßig gekoppelt ist, um die Drehzahl der Abtriebswelle 14 z.B. um einen Faktor 10 zu reduzieren und das über eine weitere Welle 24 auf die Motor-Kabeltrommel 4 übertragene Drehmoment entsprechend zu erhöhen.

Gemäß der Darstellung von Fig. 1 sind die Hysteresescheibe 10 und die Magnetscheibe 12 in einem gemeinsamen Gehäuse 26 angeordnet welches stirnseitig am Elektromotor 8 z.B. über bekannte, nicht näher gezeigte Schraubbolzen befestigt ist und in welchem das zweite Stützlager 20b zur radialen Lagerung der Abtriebswelle 14 aufgenommen ist.

Das Gehäuse 26 umfasst bevorzugt zwei Gehäusehälften 26a und 26b, die über nicht näher gezeigte Führungen axial in Richtung des Pfeils 28 zueinander verschiebbar sind, um den Abstand A zwischen der Hysteresscheibe 10 und der Magnetscheibe 12 zu verändern und hierdurch das auf die Abtriebswelle 14 ausgeübte Drehmoment zu erhöhen oder zu verringern. Das Verschieben der beiden Gehäusehälften 26a und 26b, bzw. das Einstellen des Abstandes A und damit des übertragenen Drehmoments erfolgt vorzugsweise über lediglich schematisch dargestellte Gewindebolzen 30, die in entsprechenden Innengewindehülsen 32 an der ersten Gehäusehälfte 26a aufgenommen sind und die z.B. drehbar, aber nicht in axialer Richtung verschiebbar in der zweiten Gehäusehälfte 26b gelagert sind.

Wie der Darstellung von Fig. 1 hierbei weiterhin entnommen werden kann, ist auf der Antriebswelle 6 ein Lüfterrad 34 insbesondere ein Axiallüfterrad angeordnet ist, welches Umgebungsluft durch Lufteintrittsöffnungen 36 im Gehäuse 26 hindurch ansaugt und in Richtung zur Hysteresescheibe 10 fördert, um diese zu kühlen. Die durch die nicht näher bezeichneten Pfeile angedeutete Umgebungsluft strömt nach dem Auftreffen auf die Hysteresescheibe 10 in radialer Richtung nach außen hin weg und wird über einen oder mehrere axiale Kanäle 38 in Richtung zur Magnetscheibe 12 und an dieser vorbei in axialer Richtung zum stirnseitigen Ende des Gehäuses 26 geleitet, wo sie über einen oder mehrere Luftaustrittskanäle 40 das Gehäuse 26 wieder verlässt.

Hierbei kann die Magnetscheibe 12 von einem mit Kühllamellen 42 besetzten glockenförmigen Kühlkörper 44 umgeben sein, welcher von der durch das Lüfterrad 34 geförderten Umgebungsluft vor dem Austritt aus dem Gehäuse 26 ebenfalls überstrichen wird, um auch die Magnetscheibe 12, bzw. das im Inneren des Gehäuses 26 liegende zweite Stützlager 20b zu kühlen.

Gemäß der Darstellung von Fig. 1 ist die Hysteresescheibe 10 in wenigstens zwei, bevorzugt jedoch 4 oder mehr umfängliche Teilsegmente 46a, 46b unterteilt, um diese leichter montieren zu können und die thermische Verformung der Hysteresescheibe 10 beim Betrieb der erfindungsgemäßen Magnetkupplung 1 möglichst gering zu halten.

### Liste der Bezugszeichen

- 1: erfindungsgemäße Magnetkupplung
- 2: Getriebe
- 4: Motor-Kabeltrommel/rotierendes Bauteil
- 6: Antriebswelle
- 8: Elektromotor
- 8a: Gehäuse des Elektromotors
- 9a: erstes Wellenlager
- 9b: zweites Wellenlager
- 10: Hysteresescheibe
- 12: Magnetscheibe
- 14: Abtriebswelle
- 16: scheibenförmigen Träger
- 18: Permanentmagneten
- 20a: erstes Stützlager
- 20b: zweites Stützlager
- 24: weitere Welle
- 26: Gehäuse
- 26a: erste Gehäusehälfte
- 26b: zweite Gehäusehälfte
- 28: Pfeil
- 30: Gewindebolzen
- 32: Innengewindehülse
- 34: Lüfterrad
- 36: Lufteintrittsöffnungen
- 38: axialer Kanal
- 40: Luftaustrittskanal
- 42: Kühllamellen
- 44: glockenförmigen Kühlkörper
- 46a: Teilsegment
- 46b: Teilsegment
- A: Abstand zwischen den Oberflächen von Magnet- und Hysteresescheibe

## Patentansprüche

1. Magnetkupplung (1) zur Beaufschlagung eines mit unterschiedlichen Geschwindigkeiten rotierbaren Bauteils (4), insbesondere einer Motor-Kabeltrommel eines Krans, mit Drehmoment, umfassend eine mit einer vorgegebenen Drehzahl über einen Antriebsmotor (8) antreibbare Antriebswelle (6), eine an einem Ende der Antriebswelle (6) drehfest an dieser aufgenommene Hysteresescheibe (10), eine koaxial zur Antriebswelle (6) verlaufende und mit dem rotierbaren Bauteil (4) antriebsmäßig koppelbare Abtriebswelle (14), und eine an dem der Hysteresescheibe (10) zugeordneten Ende der Abtriebswelle (14) drehfest mit dieser verbundene Magnetscheibe (12), welche in einem vorgegebenen Abstand (A) zur Hysteresescheibe (10) angeordnet ist, derart, dass infolge der Magnetkraftwirkung zwischen der Magnetscheibe (12) und der Hysteresescheibe (10) bei einer Rotation der Antriebswelle (6) ein Drehmoment von der Antriebswelle (6) auf die Abtriebswelle (14) übertragen wird,
**dadurch gekennzeichnet, dass**
die Hysteresescheibe (10) auf der Antriebswelle (6) und die Magnetscheibe (12) auf der Abtriebswelle (14) fliegend gelagert sind.

2. Magnetkupplung nach Anspruch 1,
**dadurch gekennzeichnet,**
**dass** die Hysteresescheibe (10) unmittelbar am freien Ende der Welle (6) eines Elektromotors (8) befestigt ist.

3. Magnetkupplung nach Anspruch 1,
**dadurch gekennzeichnet,**
**dass** die Hysteresescheibe (10) und die Magnetscheibe (12) in einem Gehäuse (26) angeordnet sind, welches stirnseitig am Antriebsmotor (8) befestigt ist und in welchem ein Lager (20b) zur Lagerung der Abtriebswelle (14) aufgenommen ist.

4. Magnetkupplung nach Anspruch 3,
**dadurch gekennzeichnet,**
**dass** das Gehäuse (26) zwei relativ zueinander in axialer Richtung verschiebbare Gehäusehälften (26a, 26b) umfasst, und dass zwischen den Gehäusehälften (26a, 26b) wirkende Stellmittel (30, 32) vorgesehen sind, über welche die beiden Gehäusehälften (26a, 26b) zur Veränderung des Abstands (A) zwischen der Hysteresscheibe (10) und der Magnetscheibe (12) in axialer Richtung aufeinander zu und voneinander weg verschoben werden können.

5. Magnetkupplung nach einem der vorhergehenden Ansprüche,
**dadurch gekennzeichnet,**
**dass** auf der Antriebswelle (6) ein Lüfterrad (34) angeordnet ist, welches Umgebungsluft ansaugt und in Richtung der Hysteresescheibe (10) fördert.

6. Magnetkupplung nach Anspruch 5,
**dadurch gekennzeichnet,**
**dass** die Magnetscheibe (12) von einem mit Kühllamellen (42) versehenen glockenförmigen Kühlkörper (44) umgeben ist, welcher von der durch das Lüfterrad (34) geförderten Umgebungsluft überstrichen wird.

7. Magnetkupplung nach einem der vorhergehenden Ansprüche,
**dadurch gekennzeichnet,**
**dass** die Hysteresescheibe (10) in wenigstens zwei umfängliche Teilsegmente (46a, 46b) unterteilt ist.
